# EUROPEAN PATENT APPLICATION

(11) **EP 4 434 633 A1**
(43) Date of publication of application: **25.09.2024**
(21) Application number: 22896206.4
(22) Date of filing: 18.11.2022
(51) Int. Cl.: B02B 1/04

(54) **METHOD AND DEVICE FOR WETTING GRAIN**

(30) Priority: 18.11.2021 RU 2021133641
(71) Applicant: Nalbandjan, Armen Vemirovich, Rostov-na-Donu 344092 (RU)
(72) Inventor: Nalbandjan, Armen Vemirovich, Rostov-na-Donu 344092 (RU)
(74) Representative: Osmans, Voldemars
(86) International application number: PCT/RU2022/000341
(87) International publication number: WO 2023/091050

(57) **Abstract**

The invention relates to the field of agriculture, particularly to methods of grain wetting.

A method for grain wetting comprises:
transferring grain into a container using a grain transfer hopper, wherein the grain transfer hopper is equipped with a liquid container, a pump, at least one nozzle, and pipes for liquid supply. The hopper is configured with at least one hole for at least one nozzle at the section where the grain moves. As the grain is transferred, water is introduced into the hopper, mixing the grain with water at the section where the grain is moving.

The proposed invention provides a reduction in the time required to perform agricultural tasks, including grain wetting operations, decreases the number of technical devices needed to carry out agricultural tasks including grain wetting, and decreases the number of technological operations required for performing agricultural tasks, including grain wetting operations.

## Description

### TECHNICAL FIELD

The invention relates to the field of agriculture, particularly to methods of grain wetting.

### BACKGROUND ART

At present, a method for grain wetting RU 2539207 is known, in which a stationary device for grain wetting with liquid is used. Such a method is convenient but has a drawback, namely, that a separate device intended solely for this purpose is used for grain wetting, resulting in the need for additional time and more grain transfers for wetting.

The task set by the developer of the method and device for grain wetting is to develop a method that would reduce the time required for performing agricultural operations, including grain wetting operations, decrease the number of technical devices needed for performing agricultural operations, including grain wetting operations, and also reduce the number of technological operations involved in performing agricultural operations, including grain wetting operations.

The technical result of the claimed method and device for grain wetting is the reduction of time required for performing agricultural operations, including grain wetting operations, decrease in the number of technical devices needed for performing agricultural operations, including grain wetting operations, as well as the reduction in the number of technological operations involved in performing agricultural operations, including grain wetting operations.

### SUMMARY OF INVENTION

The essence of the grain wetting method is as follows. Grain is transferred into a container by a hopper-loader, where it is necessary to transfer the grain, characterized in that the hopper-loader is equipped with a liquid container, a pump, and at least one nozzle, pipes for liquid supply, and also in the hopper-loader design provide at least one hole for at least one nozzle at the section where grain movement occurs, and using the hopper-loader, water is placed in the container, during the grain movement process, the grain is mixed with water at the section where grain movement occurs.

The essence of the grain wetting method according to the second embodiment is as follows. Grain is transferred into a container by a hopper-loader, where it is necessary to transfer the grain, characterized in that the hopper-loader is equipped with a pump and at least one nozzle, pipes for liquid supply, and also in the hopper-loader design provide at least one hole for at least one nozzle at the section where grain movement occurs, and using the hopper-loader, during the grain movement process, the grain is mixed with water at the section where grain movement occurs, using water located outside the hopper-loader design.

The essence of the grain wetting device is as follows. The device is a grain hopper-loader equipped with a pump, at least one nozzle, liquid transfer pipes, and a control system. Additionally, the hopper-loader design includes at least one hole for at least one nozzle at the section where grain movement occurs.

The grain wetting device may additionally comprise at least one liquid container. Moreover, the liquid container may be filled not only with water but also, for example, with a fire extinguishing agent, and on the grain hopper-loader, there is additionally installed a device for applying the aforementioned fire extinguishing agent.

### BRIEF DESCRIPTION OF DRAWINGS

Invention is illustrated graphically, where:

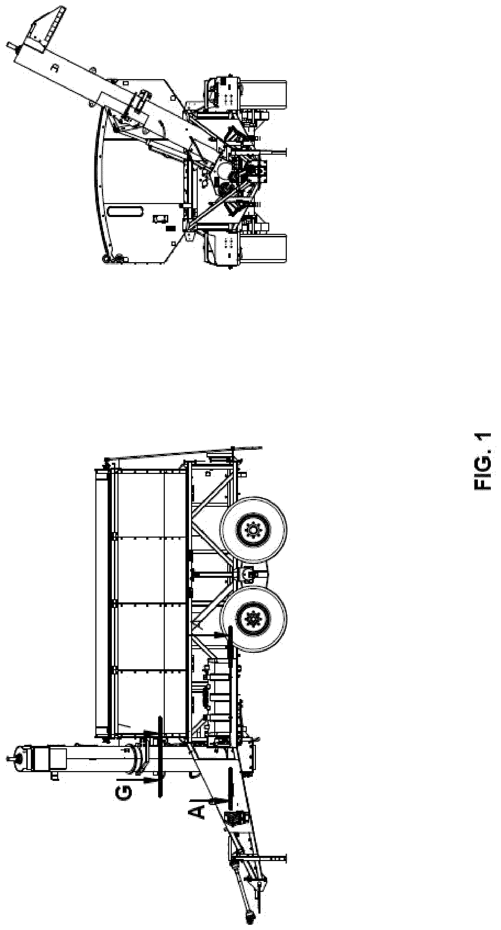

Fig. 1 shows the grain humidification device.

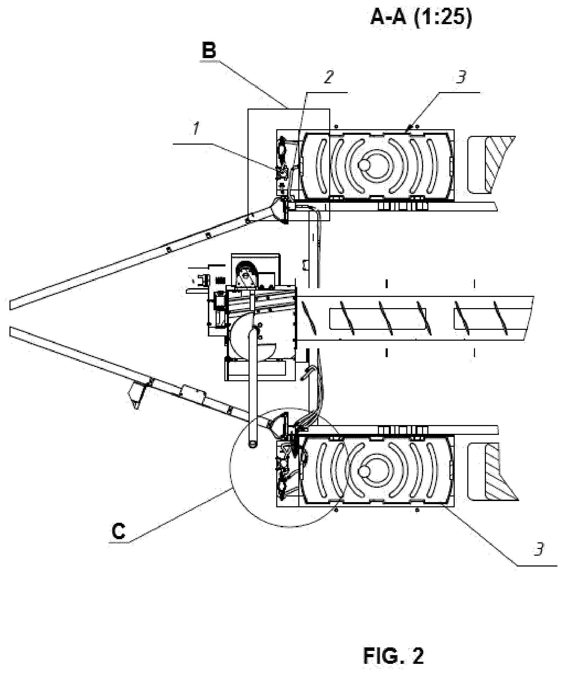

Fig. 2 shows the sectional view A-A of Fig. 1.
   The numerals indicate: 1 - Pump; 2 - Pipes for liquid transfer; 3 - Water tank.

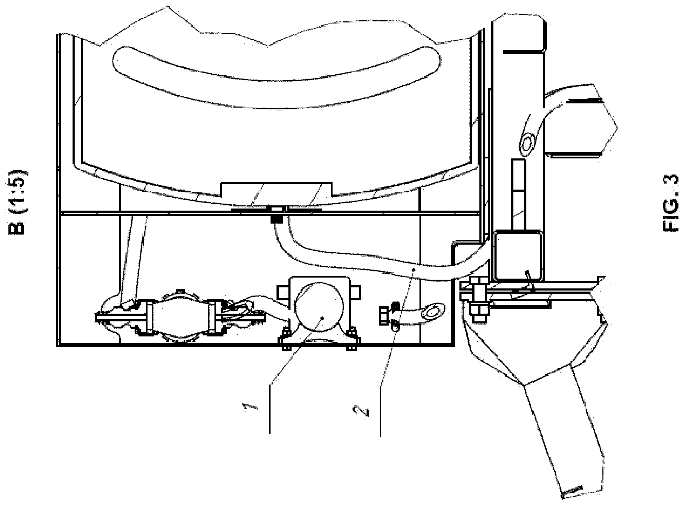

Fig. 3 shows the detachable element B of Fig. 2.
   The numerals indicate: 1 - Pump; 2 - Pipes for liquid transfer.

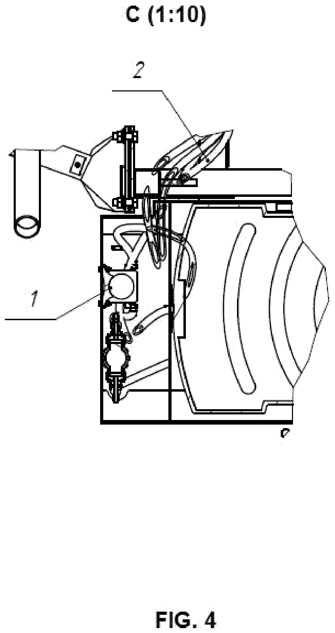

Fig. 4 shows the detachable element C of Fig. 2.
   The numerals indicate: 1 - Pump; 2 - Pipes for liquid transfer.

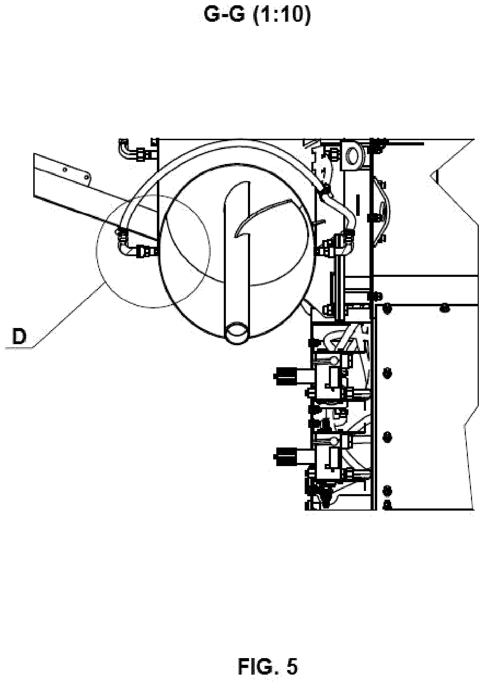

Fig. 5 shows the sectional view G-G of Fig. 1.

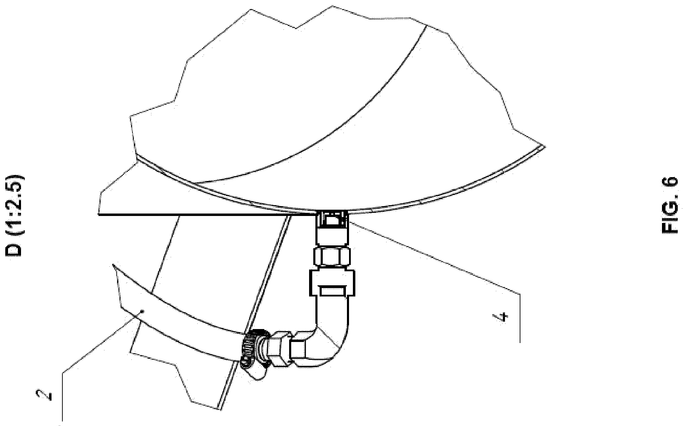

Fig. 6 shows the detachable element D of Fig. 5.

The numerals indicate: 2 - Pipes for liquid transfer; 4 - Nozzles.

### DESCRIPTION OF EMBODIMENTS

The claimed method of grain wetting according to the first embodiment is as follows. To implement the claimed method, a hopper-loader is used. An example of a hopper-loader can be, for instance, a hopper-loader manufactured by Liliani Company https://liliani.ru/product/grain-transfer-trailer/grain-transfer-trailer-16.s2.html.

The hopper-loader is equipped with a liquid container, a pump, liquid supply pipes, and at least one nozzle. Additionally, the hopper-loader design includes at least one hole for at least one nozzle at the section where grain movement occurs. Examples of such sections where grain movement occurs may include augers and other conveying devices, hoppers, and receiving bins where grain is in constant motion during unloading or loading.

Water is placed into the liquid container. Then, during the grain movement process, the grain is mixed with water at the section where grain movement occurs, which is sprayed using a pump and nozzles. For instance, if a dosing pump is used, water can be sprayed in a controlled manner. Mixing the grain with water occurs as a result of grain movement.

Sections where grain movement occurs can include loading and/or unloading systems. In most cases, the loading system in the design of hopper-loaders consists of a loading auger and a receiving bin, while the unloading system consists of horizontal and vertical augers for unloading and a chute into which the grain enters from the horizontal auger, then moves into the vertical auger.

It is obvious that to achieve the technical result, nozzles can be placed, for example, on the loading hopper, on the casing of the loading auger, on the protective doser of the horizontal auger (the screw protection system from grain compression), in the grain movement channel by the horizontal auger (under the auger, on the bunker walls, or on the cleanout hatches), on the casing of the vertical auger, on the chute where the grain flows are connected - from the horizontal to the vertical auger, or other parts where grain movement occurs.

The claimed method of grain wetting according to the second embodiment is as follows.

Grain is transferred into a container by a hopper-loader, where it is necessary to transfer the grain, characterized in that the hopper-loader is equipped with a pump, at least one nozzle, liquid supply pipes, and the hopper-loader design includes at least one hole for at least one nozzle at the section where grain movement occurs, and using the hopper-loader, during the grain movement process, the grain is mixed with water at the section where grain movement occurs, using water located outside the hopper-loader design.

The second embodiment of the invention differs from the first in that a liquid container is not installed on the hopper-loader, instead utilizing water located outside the hopper-loader design. For instance, water can be supplied through a hose from a central water supply system, or water from nearby water sources can be used with the help of a pump and pipes.

The amount of water needed to mix with the grain is determined individually and depends on dryness of the grain and other factors. The method is applicable to any hygroscopic grain. Such grains may include, for example, wheat, barley, sunflower seeds, etc.

The claimed grain wetting device is a grain hopper-loader equipped with a pump, at least one nozzle, liquid transfer pipes, and a control system. Additionally, the hopper-loader design includes at least one hole for at least one nozzle at the section where grain movement occurs.

Additionally, on the hopper-loader, at least one liquid container can be installed.

In this device, the pump is necessary for transferring liquid from the container or from external sources to the part of the device where the nozzle hole is provided and where this nozzle is installed. Nozzles help to spray the liquid onto the area where grain movement occurs. The control system may be a simple system regulating the delivery of a certain amount of liquid per unit of time, or an intelligent system controlled via a mobile computer, which adjusts the dosed delivery based on data from moisture sensors built into the hopper or within the flow, to achieve a user-defined desired wetting output.

The liquid container can be filled with a fire extinguishing agent, and on the grain hopper-loader, there may additionally be installed a device for applying the aforementioned fire extinguishing agent. Moreover, additional liquid containers may be integrated into the grain hopper-loader to enhance the firefighting system's capabilities. In this case, the grain wetting device can be utilized for fire suppression purposes.

If the liquid container is filled with a seed treatment or inoculant, the grain wetting device can also be used during grain seeding for seed treatment or inoculant application before transferring the grain to the seeder.

Moreover, if the grain wetting device is equipped with two or more containers, one filled with water and another with concentrated pesticide, the device can also be used for preparing liquids for field spraying with pesticides or plant protection agents.

### INDUSTRIAL APPLICABILITY

Due to the grain wetting occurring during grain transfer, the time required to perform agricultural operations involving grain wetting is reduced. In other words, the grain transfer and wetting operations happen simultaneously. Consequently, the number of technical devices required for agricultural operations involving grain wetting is also reduced. For example, wetting is used to increase the wetting grain before milling in a mill or in compound feed production, where a separate grain wetting device is necessary. For those productions where grain delivery is conducted from floor storage warehouses or plastic sleeves by mobile transport vehicles such as trucks or tractors with trailers, this method allows excluding the wetting process from the technological chain of operations and performing it concurrently with the unloading process from the hopper-loader.

## Claims

1. A method for wetting grain, wherein the grain is transferred using a grain transfer hopper into a container into which the grain needs to be transferred, **characterized in that** the grain transfer hopper is equipped with a liquid container, a pump, and at least one nozzle, liquid supply pipes, as well as at least one opening for at least one nozzle in the area where the grain moves, and using the grain transfer hopper with water placed in its container, the grain is mixed with water in the area where the grain moves.

2. A method for wetting grain, wherein the grain is transferred using a grain transfer hopper into a container into which the grain needs to be transferred, **characterized in that** the grain transfer hopper is equipped with a pump and at least one nozzle, liquid supply pipes, and at least one hole for at least one nozzle in the area where the grain moves, and using the grain transfer hopper, during the grain transfer process, the grain is mixed with water in the area where the grain moves, with the water being sourced from outside the grain transfer hopper's structure.

3. A grain wetting device, represents a grain hopper-loader equipped with a pump, at least one nozzle, liquid delivery pipes, and a control system, wherein the hopper-loader's structure includes at least one hole for at least one nozzle at the grain movement area.

4. The grain wetting device, according to claim 3, wherein in that, at least one liquid container is additionally installed on the grain hopper-loader.

5. The grain wetting device, according to claim 4, wherein in that, the liquid container can be filled with a agent intended for extinguishing fire, and additionally, a device for applying the aforementioned agent intended for extinguishing fire is installed on the grain hopper-loader.
